# EUROPEAN PATENT SPECIFICATION

(11) **EP 1 671 990 B1**
(45) Date of publication and mention of the grant of the patent: **11.03.2009**
(21) Application number: 05026946.3
(22) Date of filing: 09.12.2005
(51) Int. Cl.: C08G 18/08, C08G 18/38, C09D 175/04

(54) **Aqueous coating compositions**
Wässrige Beschichtungszusammensetzungen
Compositions de revêtement aqueux

(30) Priority: 10.12.2004 US 9433
(43) Date of publication of application: 21.06.2006
(73) Proprietor: E.I. DU PONT DE NEMOURS AND COMPANY, Wilmington, DE 19898 (US)
(72) Inventor: Huybrechts, Jozef Theresia, Turnhout Belgium 2300 (BE); Linsen, Koen, Bilzen Belgium B-3740 (BE); Vaes, Ann, Koningshooikt Belgium B-2500 (BE)
(74) Representative: DuPont Performance Coatings Biering/Blum/Kimpel

(56) References cited:
- EP-B- 0 703 255
- US-A- 5 665 434

## Description

### Background of the Invention

The invention relates to aqueous coating compositions for automotive and industrial coatings based on binders with functional groups containing active hydrogen and polyisocyanate cross-linking agents and with improved water dispersibility.

### Description of the Prior Art

Against the background of increasingly stringent environmental legislation, water-based paints have become more and more important in recent years in various fields of application, including, vehicle painting. Water-soluble or water-dispersible hydroxyfunctional binders are provided for the production of water-based two-component polyurethane paints. It has proven difficult to incorporate conventional hydrophobic polyisocyanates, i.e., polyisocyanates that have not been specifically hydrophilized, as hardeners, into the aqueous system. There have therefore been attempts to render the polyisocyanates hydrophilic to achieve better dispersibility in water and miscibility with the water-thinnable binders.

For example, nonivnic polyisocyanates that have been rendered hydrophilic by polyethers are used in practice. The production of these water-dispersible polyisocyanates is described, for example, in EP-A 0 959 087, page 2, lines 25-46. Despite being broadly accepted in the market, polyether-modified polyisocyanates have still drawbacks. The high polyether content that is required for adequate dispersibility, in particular for use as crosslinking agents in aqueous two-component polyurethane paints, makes the resultant coatings permanently hydrophilic and insufficiently hard.

To avoid these drawbacks, attempts have also already been made to produce self-dispersible polyisocyanates that are rendered hydrophilic by incorporation of ionic groups. Polyisocyanates of this type, which contain chemically bound carboxyl groups, are described, for example, in EP-A 0443138, EP-A 0510438 and EP-A 0548669. Although these polyisocyanates may be stirred in a very finely divided form into aqueous systems after neutralization of the carboxyl groups, without the need for high shearing forces, they are inadequately stable in storage, in particular in neutralized form.

EP-A 0 703 255 also describes ionically modified polyisocyanates that contain, as emulsifiers, reaction products of polyisocyanate and any hydroxy/mercapto- or aminofunctional compounds with at least one sulphuric acid group. Hydroxysulphonic acids containing aliphatically bound OH groups are mentioned as preferred structural components for emulsifier production. However, all the hydroxysulphonic acids mentioned generally form reaction products of polyisocyanates that have a pronounced yellow colour, and this precludes use of these products as the crosslinking component in high-quality paint systems, in particular clear-coat systems.

WO-A 01/88006 also discloses water-dispersible polyisocyanates which are produced by reacting polyisocyanates with 2-(cyclohexylamino)ethane sulphonic acid and/or 3-(cyclohexylamino)propane sulphonic acid. These are dispersible in water after at least partial neutralization of the sulphonic groups. However, polyisocyanates that are modified in this way are very expensive.

US-A-5 665 434 discloses aqueous coating compositions based on polyols with ammonium groups and polyisocyanates.

A general disadvantage of hydrophilically modified polyisocyanates is, that in aqueous coating compositions containing those polyisocyanates significant amounts of organic solvents are necessary to achieve the same good level of appearance of the coatings as known from solvent-based coating compositions.

There was therefore a need for aqueous coating compositions based on binder components with functional groups containing active hydrogen and polyisocyanate hardeners which, on the one hand, comprise storage-stable binder and crosslinking components, enhance the miscibility of the polyisocyanates with the water-thinnable binders and enhance the dispersibility of the polyisocyanates in aqueous media and, on the other hand, lead to coatings that are insensitive to moisture, are highly resistant to chemicals, show a very good appearance and are sufficiently hard. Furthermore, such aqueous coating compositions should contain only small amounts of organic co-solvents.

### Summary of the Invention

The present invention relates to aqueous coating compositions comprising
A) at least one water-dilutable binder with functional groups containing active hydrogen,
B) at least one polyisocyanate cross-linking agent with free isocyanate groups,
C) at least one amino functional and acid functional compound having at least one carboxyl group and at least one group selected from a group consisting of primary amino group, secondary amino group and mixtures thereof, and having preferably a molecular weight of 75 to 1000 g/mole, especially preferred of 75 to 800 g/mol,
D) water and optionally,
E) usual coating additives, pigments and organic solvents.
The molecular weight of component C) as used here and thereafter is the molecular weight calculated on basis of the structural formula. If components C) are used that do not have an exact molecular weight but a molecular weight distribution, the molecular weight is the number average molecular weight (Mn).

The present invention also relates to a process for preparing aqueous coating compositions based on binders with functional groups containing active hydrogen and polyisocyanate cross-linking agents with free isocyanate groups, comprising the steps:
I) providing a binder component comprising at least one water-dilutable binder with functional groups containing active hydrogen A),
II) providing a cross-linking agent component, comprising at least one polyisocyanate cross-linking agent with free isocyanate groups B),
III) mixing the binder component and the crosslinking agent component with each other and
IV) adding at least one amino functional and acid functional compound C) having at least one carboxyl group and at least one group selected from a group consisting of primary amino group, secondary amino group and mixtures thereof, and having preferably a molecular weight of 75 to 1000 g/mole, especially preferred of 75 to 800 g/mol, to the polyisocyanate cross-linking agent B),
wherein the amino functional and acid functional compound C) is added to the polyisocyanate cross-linking agent B) shortly before application of the aqueous coating composition.

The amino functional and acid functional compound C) can be added to the polyisocyanate cross-linking agent B) separately (1) or as part of the binder component A) due to prior mixing with the binder component A) (2), wherein in case (1) the amino functional and acid functional compound C) can be added to the polyisocyanate cross-linking agent B) after mixing the binder component and the crosslinking agent component or can be added before mixing the binder component and the crosslinking agent component. Alternatively, all three components A), B) and C) can be simultaneously mixed together. Preferably, compound C) is added to the polyisocyanate cross-linking agent B) at the same time prior to application the binder component and the polyisocyanate crosslinking agent of a two-component system are usually mixed.

### Detailed Description of the Invention

It was surprising and not obvious that the in *situ* hydrophilization of conventional hydrophobic polyisocyanates (i.e., not specifically hydrophilized polyisocyanates) directly before application of the coating composition, i.e., addition of the amino- and carboxyfunctional compound C) to the polyisocyanate component B) just before application of the coating composition, enhanced the dispersibility of the polyisocyanate component in the aqueous binder system and in the aqueous medium in general and enhanced the compatibility and miscibility with the water-thinnable binders, without having to allow for the drawbacks of hydrophilically modified polyisocyanates known from the prior art, such as, deficient stability in storage or yellowing of the hardener component. Hard coatings showing a good appearance, which are also insensitive to moisture and resistant to chemicals, have surprisingly been obtained with the coating compositions according to the invention.

Hereafter the invention is described in more detail.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard.

The coating composition of the present invention preferably comprises A) 10-90% by weight solids of at least one water-reducible binder with functional groups containing active hydrogen, B) 5-70% by weight solids of at least one curing agent with free isocyanate groups and C) 0.05-15.0% by weight solids, especially preferred, 0.1-10% by weight solids and most preferred. 0.7-5% by weight solids of at least one amino functional and acid functional compound having at least one carboxyl group and at least one group selected from a group consisting of primary amino group, secondary amino group and mixtures thereof, wherein the % by weight of components A), B) and C) add up to 100% by weight.

In addition to components A), B) and C) the coating composition contains water and may contain usual coating additives, pigments and organic solvents in usual amounts well known to a person skilled in the art.

Component A) of the coating composition according to the invention comprises water-dilutable binders with functional groups containing active hydrogen. The water-dilutable binders are oligomeric and/or polymeric compounds with a number average molecular weight of, e.g.. 500 to 500,000 g/mole, preferably of 1100 to 300,000 g/mole. The functional groups with active hydrogen in particular comprise hydroxyl groups, primary and/or secondary amino groups. Binders with hydroxyl groups are preferably used as component A).

The binders with hydroXyl groups are for example the polyurethanes, (meth)acrylic copolymers, polyesters and polyethers, known from polyurethane chemistry to the skilled person, which are used in the formulation of aqueous coating compositions. They may each be used individually or in combination with one another.

In order to ensure sufficient water dilutability of the binders A), these binders are modified in a suitable manner to render them hydrophilic. The binders A) may be ionically or non-ionically modified. An anionic and/or non ionic modification is preferred. An anionic modification may be obtained, for example, by incorporating carboxyl groups which are at least partially neutralized. A non ionic modification may be obtained, for example, by incorporating polyethylene oxide units. Alternatively, or in addition thereto, it is possible to obtain water-dilutability via extemal emulsifiers.

Examples of water-dilutable polyurethane resins are those, for example, with a number average molecular weight Mn of 500 to 500 000 g/mol, preferably, of 1100 to 300 000 g/mol, most preferably, of 5000 to 300 000 g/mol, an acid value of 10 to 100 mg KOH/g, preferably of 20 to 80 mg KOH/g, and a hydroxyl value of 40 to 400 mg KOH/g, preferably, of 80 to 250 mg KOH/g. Appropriate polyurethane resins which may be used are, for example, prepared by reacting compounds which are reactive with respect to isocyanate groups and polyisocyanates having at least 2 free isocyanate groups per molecule.

Polyols of high molecular weight can be used as compounds which are reactive with respect to isocyanate groups, preferably, polyester polyols, polyether polyols and/or polycarbonate polyols with a molecular weight of, for example, 500-6000 g/mol. Polyols of low molecular weight with a molecular weight of 60-400 g/mol can also be co-used. Aliphatic and/or cycloaliphatic diisocyanates can preferably be used as polyisocyanates. Examples of useful polyisocyanates are phenylene diisocyanate, xylylene diisocyanate, diphenylmethane diisocyanate, isophorone diisocyanate, dicyclohexylmethane diisocyanate, tetramethylene diisocyanate, hexamethylene diisocyanate. In order to obtain a sufficient water-dilutability, the polyurethane resins can be modified, for example, with anionic groups as described above. The anionic groups can be introduced by way of compounds having at least one group reactive with respect to isocyanate groups and at least one group capable of producing anions. Preferred compounds of this type are dihydroxycarboxylic acids, with particular preference for dimethylolpropionic acid.

The thus obtained polyurethane resins can still be subjected to chain extension to increase the molecular weight. For example, NCO-functional polyurethane prepolymers can be reacted with compounds, which are reactive with respect to isocyanate groups. Compounds, which are reactive with respect to isocyanate groups, are in particular compounds with hydroxyl and/or secondary and/or primary amino groups. OH-functional polyurethane prepolymers can be chain extended for example with polyisocyanates

The water-dilutable polyurethane resins include such resins which are in modified form, for example, as silicon-modified or (meth)acrylated polyurethane resins. Examples of water-dilutable polyurethane resins which may be used are described in U.S. 5,492,961, U.S. 5,141,987, U.S. 5,556,912, DE-A-41 15 042, U.S. 5,635,559, U.S. 5,691,425, DE-A-42 28 510, U.S. 5,854,337, U.S. 4,489,135.

Examples of water-dilutable poly(meth)acrylate resins include all water-soluble or water-dispersible poly(meth)acrylate resins which are suited for aqueous coatings and known to a skilled person. For example, they can be those with a number average molecular mass Mn of 1000-200 000 g/mol, preferably, of 1100-15000, an acid value of 10-100 mg KOH/g, preferably, of 15-50 and a hydroxyl value of 40-400 mg KOH/g, preferably, of 60-200 mg KOH/g. The water-dilutable poly(meth)acrylate resins can also have been prepared in the presence of different binders, e.g., in the presence of oligomeric or polymeric polyester and/or polyurethane resins.

The poly(meth)acrylate copolymer can be prepared by free-radical polymerization of polymeriZable, olefinically unsaturated monomers, optionally, in presence of oligomeric or polymeric polyester and/or polyurethane resins. Free-radically polymerizable, olefinically unsaturated monomers, which may be used are monomers which, in addition to at least one olefinic double bond, also contain further functional groups and monomers which, apart from at least one olefinic double bond, contain no further functional groups. Further functional groups may be, for example, urea, hydroxyl, carboxyl, sulfonic acid, silane, amine, amide, acetoacetate or epoxy groups. It would be clear that only those functional groups can be combined in the poly(meth)acrylate copolymer which do not tend to self-crosslink.

Olefinically unsaturated monomers with hydroxyl groups are used to introduce hydroxyl groups into the (meth)acrylic copolymers. Suitable hydroxy-functional unsaturated monomers are, for example, hydroxyalkyl esters of alpha, beta-olefinically unsaturated monocarboxylic acids with primary or secondary hydroxyl groups. These may, for example, comprise the hydroxyalkyl esters of acrylic acid, mefihacrylic acid, crotonic acid and/or isocrotonic acid. The hydroxyalkyl esters of (meth)acrylic acid are preferred. The hydroxyalkyl residues may contain, for example, 2-10 C atoms, preferably, 2-6 C atoms. Examples of suitable hydroxyalkyl esters of alpha, beta-olefinically unsaturated monocarboxylic acids with primary hydroxyl groups are hydroxyethyl (math)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters with secondary hydroxyl groups are 2-hydroxypropyl (meth)acrylate, 2-hydroxybutyl (meth)acrylate, 3-hydroxybutyl (meth)acrylate. Further olefinically unsaturated monomers with hydroxyl groups may of course also be used.

Carboxyl functional olefinically unsaturated monomers are used to introduce carboxyl groups into the (meth)acrylic copolymers. Examples of suitable olefinically unsaturated carboxylic acids include acrylic acid, methacrylic acid, crotonic acid and isocrotonic acid, itaconic acid, maleic acid, fumaric acid and the halfesters of the difunctional acids. Acrylic and methacrylic acid are preferred.

Examples of other additional suitable unsaturated monomers, which contain apart from an olefinic double bond further functional groups are ethyleneurea ethyl (meth)acrylate, dimethylaminoethyl (meth)acrylate, acetoacetvxyethyl (meth)acrylate, (meth)acrylamide, alkoxy methyl (meth)acrylamides, vinyl silane, methacryloxyethyl trialkoxysilanes, acrylamido 2 - methyl propane, vinyl imidazole.

Unsaturated monomers which, apart from at least one olefinic double bond, contain no further functional groups are, for example, aliphatic esters of olefinically unsaturated carboxylic acids, vinyl ester and /or vinylaromatic hydrocarbons.

Examples of suitable aliphatic esters of olefinically unsaturated carboxylic acids include, in particular, esters of alpha, beta-olefinically unsaturated monocarboxylic acids with aliphatic alcohols. Examples of suitable olefinically unsaturated carboxylic acids are acrylic acid, methacrylic acid, crotonic acid and isocrotonic acid. The alcohols are, in particular, aliphatic monohydric branched or unbranched alcohols having 1-20 carbon atoms in the molecule. Examples of (meth)acrylates with aliphatic alcohols are methyl acrylate, ethyl acrylate, isopropyl acrylate, tert.-butyl acrylate, n-butyl acrylate, isobutyl acrylate, 2-ethylhexy acrylate, lauryl acrylate, stearyl acrylate and the corresponding mothacrylates.

Examples of suitable vinyl esters are vinyl acetate, vinyl propionate and vinyl esters of saturated monocarboxylic acids branched in the alpha position, e.g., vinyl esters of saturated alpha,alpha'-dialkylalkane monocarboxylic acids and vinyl esters of saturated alpha-alkylalkane monocarboxylic acids having in each case 5-13 carbon atoms, preferably, 9-11 carbon atoms in the molecule.

Examples of vinylaromatic hydrocarbons preferably are those having 8-12 carbon atoms in the molecule. Examples of such monomers are styrene, alpha-methytstyrene, chlorostyrenes, vinyltoluenes, 2,5-dimethylstyrene, p-methoxystyrene and tertiary-butylstyrene. Most preferred styrene is used as component c).

The preparation of the (meth)acrylic copolymer takes place by usual preparation techniques, e,g., by radical solution polymerization.

Examples of water-dilutable polyester resins which can be used as binder component A) include all water-soluble or water-dispersable polyester resins which are suited for aqueous coatings, for example, hydroxyfunctional polyesters with a number average molecular weight of 500-10,000 g/mol, preferably, of 1100-8000 g/mol, an acid value of 10-150 mg KOH/g, preferably, of 15-50 mg KOH/g and a hydroxyl value of 40-400 mg KOH/g, preferably, of 50-200 g/mol. The polyesters may be saturated or unsaturated and they may optionally be modified with fatty acids. The polyesters are produced using known processes with elimination of water from polycarboxylic acids and polyalcohols.

The coating compositions can also contain low molecular reactive components, so-called reactive thinners, which are able to react with the cross-linking components. Examples of these are hydroxy- or amino-functional reactive thinners.

The aqueous coating compositions, according to the invention contain polyisocyanates with free isocyanate groups (component B) as cross-linking agents. Examples of the polyisocyanates are any number of organic polyisocyanates with aliphatically, cycloaliphatically, araliphatically and/or aromatically bound free isocyanate groups. The polyisocyanates are liquid at room temperature or become liquid through the addition of organic solvents. At 23°C, the polyisocyanates generally have a viscosity of 1 to 6,000 mPas, preferably, above 5 and below 3,000 mPas.

The preferred polyisocyanates are polyisocyanates or polyisocyanate mixtures with exclusively aliphatically and/or cycloaliphatically bound isocyanate groups with an average NCO functionality of 1.5 to 5, preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclvhexane (IPDI) and/or bis(isocyanatocyclohexyl)-methane and the derivatives known per se, containing biuret, allophanate, urethane and/or isocyanurate groups of these diisocyanates which, following production, are free from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethyl-hexamethylene diisocyanate, 1,5-dibutyl-penta-methyldiisocyanate, p- or m-tetramethylxylylene diisocyanate and the appropriate hydrated homologues.

In principle, diisocyanates can be converted by the usual method to higher functional compounds, for example, by trimerization or by reaction with water or polyols, such as, for example, trimethylolpropane or glycerine. The polyisocyanates can also be used in the form of isocyanate-modified resins.

The polyisocyanate cross-linking agents can be used individually or mixed.

The polyisocyanate cross-linking agents are those commonly used in the paint industry, and are described in detail in the literature and are also obtainable commercially.

The isocyanate groups of polyisocyanate crosslinking agent B) may be partially blocked. Low molecular weight compounds containing active hydrogen for blocking NCO groups are known. Examples of these are aliphatic or cycloaliphatic alcohols, dialkylaminoalcohols, oximes, lactams, imides, hydroxyalkyl esters, esters of malonic or acetoacetic acid.

Although not preferred, the polyisocyanate crossliking agent B) can be used in combination with co-crosslinkers, e.g., in combination with melamine resins and/or completely blocked polyisocyanates.

According to the invention amino functional and acid functional compounds having at least one carboxyl group and at least one group selected from a group consisting of primary amino group, secondary amino group and mixtures thereof, are used as component C). The amino functional and acid functional compounds having preferably a molecular weight of 75 to 1000 g/mol, especially preferred, of 75 to 800 g/mol. Preferred examples of suitable compounds C) are amino mono- or dicarboxylic acids with at least one primary and/or secondary amino group. Examples of suitable amino monocarboxylic acids are glycine (amino acetic acid), aminopropionic acid, 4-aminobutyric acid, 6-amino caproic acid, 6-benzoyl-amino-2-chlorocaproic acid, oxaluric acid, anilido acetic acid, 2-hydroxy-carbazole-carboxylic acid-3, 2-ethylamino-benzoic acid, N-2(2-carboxyphenyl)-aminoacetic acid, N-phenylaminoacetic acid, 3,4-diaminobenzoic acid and 5-(4'aminobenzoyi-amino)-2-aminobenzoic acid, sarcosine, methionine, alpha-alanine, beta-alanine, valine, leucine, isoleucine, phenylalanine, cysteine, histidine, lysine. Examples of suitable amino dicarboxylic acids are 5-aminobenzene-dicarboxylic acid, aspartic acid and glutamic acid.

Further examples of suitable compounds C) are compounds which can be prepared via addition reaction of ammonium and amine compounds having at least one primary amine group or at least two secondary amine groups with olefinically unsaturated di- or monocarboxylic acids, such as (meth)acrylic acid, maleic acid, fumaric acid, crotonic acid and itaconic acid. Examples of suitable amine compounds are the well known aliphatic, cycloaliphatic, heterocyclic and aromatic mono-, di-, tri- or higher functional amines. Examples of monoamines are (cyclo)aliphatic alkyl amines and alkoxy alkyl amines with 1-13 carbon atoms in the molecule and substituted derivatives thereof, wherein the alkyl groups can be linear and/or branched. Examples are monomethyl amine, ethyl amine, propyl amine, isopropyl amine, butyl amine, secondary butyl amine, tertiary butyl amine, hexylamine, ethyl hexyl amine, octyl amine, stearyl amine, 2-methoxy 1-ethyl amine, 2-ethoxy ethyl amine, 3-ethoxy propyl amine and 3-methoxy propyl amine. Further examples of monoamines are aromatic amines and substituted derivatives thereof, e.g., o- toluidine, 2-phenyl ethylamine, benzylamine, aniline, aminopropyl morphiline and aminopropyl imidazole.

Examples of diamines are (cyclo)aliphatic alkyl amines with 1-15 carbon atoms in the molecule and substituted derivatives thereof, wherein the alkyl groups can be linear and/or branched. Examples are ethylene diamine, 1,3-propane diamine, neopentyldiamine, hexamethylene diamine, octamethylene diamine, isophorone diamine, 4,4'-diamino dicyclohexylmethane. Aromatic diamines are e.g., 4,4'-diamino diphenylmethane and 2-amino benzamide. Examples of triamines are diethylene triamine and dipropylene triamine.

The amine compounds may be substituted with further functional groups, e.g., with hydroxyl or ether groups. Examples of substituted amines are for example, amino alcohols such as monoethanol amine, 3-amino 1-propanol, isopropanol amine, 2-(2-aminoethoxy) ethanol.

Especially preferred components C) are glycine, 11-amino undecanoic acid and the natural available amino acids mentioned above. Most preferred are glycine and the natural available amino acids.

The binders with functional groups containing active hydrogen A) and the polyisocyanate cross-linking agents B) are used in such proportion that the equivalent ratio of functional groups containing active hydrogen, preferably, hydroxyl groups, of binders A) to the isocyanate groups of cross-linking components B) available for the crosslinking reaction with the functional groups containing active hydrogen of binders A), can be 5:1 to 1:5, for example, preferably, 3:1 to 1:3, and in particular, preferably, 1.5:1 to 1:1.5. If reactive thinners are used, their reactive functions should be taken into account when calculating the equivalent ratio.

The coatings, according to the invention, contain furthermore water, for example, 30-60% by weight, and possibly small amounts of organic solvents, e.g., up to 15% by weight, preferably, up to 10% by weight based on the entire coating composition. The organic solvents are solvents conventionally used in coating techniques. These may originate from the preparation of the binders or are added separately. Examples of suitable solvents are monohydric or polyhydric alcohols, e.g., propanol, butanol, hexanol; glycol ethers or esters, for example, diethylene glycol dialkyl ether, dipropylene glycol dialkyl ether, each with C1- to C6-alkyl, ethoxypropanol, butyl glycol; glycols, for example, ethylene glycol, propylene glycol, N-methyl pyrrolidone and ketones, e.g., methyl ethyl ketone, acetone, cyclohexanone; aromatic or aliphatic hydrocarbons, for example, toluene, xylene, or straight-chain or branched aliphatic C6-C12-hydrocarbons. If organic solvents are present, water-miscible organic solvents are preferred.

The coating compositions, according to the invention, can contain pigments, fillers and/or usual coating additives. All colour and/or special effect-giving pigments of organic or inorganic type used in paints are suitable for pigments. Examples of inorganic or organic colour pigments are titanium dioxide, micronized titanium dioxide, iron oxide pigments, carbon black, azo pigments, phthalocyanine pigments, quinacridone or pyrrolopyrrole pigments. Examples of special effect pigments are metal pigments, for example, from aluminum or copper, interference pigments, such as, for example, aluminum coated with titanium dioxide, coated mica, graphite effect pigments and iron oxide laminae. Examples of fillers are silicon dioxide, barium sulphate, talcum, aluminium silicate and magnesium silicate.

The additives are additives usually used in the paint industry. Examples of such additives are light stabilizers, for example, based on benztriazoles and HALS (hindered amine light stabilizer) compounds, flow control agents based on (meth)acrylic homopolymers or silicon oils, rheology-influencing agents, such as, highly disperse silicic acid or polymeric urea compounds, thickeners, such as, cross-linked polycarboxylic acid or polyurethanes, anti-foaming agents, wetting agents, curing accelerators for the cross-linking reaction, for example, organic metallic salts, such as, dibutyl tin dilaurate, zinc naphthenate and compounds containing tertiary amino groups, such as, triethylamine for the cross-linking reaction of hydroxy functional binders with polyisocyanates. The additives are added in the usual amounts familiar to the person skilled in the art, e.g. in amounts of 0,01 to 5,00 % by weight based on the entire coating composition.

The process for producing the coating compositions according to the invention comprises the aforementioned steps I to IV. It is essential to the invention that the carboxyl- and aminofunctional component C) is added to the polyisocyanate component B) or mixed therewith just before use, i.e., just before application of the coating composition. Component C) may be added in various ways:
(1) component C) may be added to the polyisocyanate component as a separate component.
(2) component C) may be added to the polyisocyanate component as a constituent of the binder component (A).
(3) components A), B) and C) may be mixed together simultaneously.

In case (1), component C) may be added after or before mixing binder component A) and polyisocyanate component B), but it is definitely preferred to add component C) before mixing binder component A) and polyisocyanate component B). If hydroxyfunctional binders A) are used, method (2) is preferred, i.e., component C) is added as a constituent of the binder component A) to the polyisocyanate component B). In this case, a single component AC) containing both the binder component A) and component C) may be produced, stored and presented for use. A normal two-component system can then be used in the conventional manner, no additional components C) being required by the user.

Therefore, especially preferred aqueous coating compositions according to the invention are those, comprising
Component AC), which comprises a mixture of at least one water-dilutable hydroxy- functional binder A) and at least one amino functional and acid functional compound C) having at least one carboxyl group and at least one group selected from a group consisting of primary amino group, secondary amino group and mixtures thereof, and having preferably a molecular weight of 75 to 1000 g/mole, most preferred of 75 to 800 glmole;
Component B) which comprises at least one polyisocyanate cross-linking agent with free isocyanate groups,
D) water and optionally,
E) usual coating additives, pigments and organic solvents.
   Accordingly an especially preferred process for producing the aqueous coating compositions according to the invention comprises
   I) providing a component AC) comprising a mixture of at least one water-dilutable hydroxy- functional binder A) and at least one amino functional and acid functional compound C),
   II) providing a cross-linking agent component, comprising at least one polyisocyanate uoss-linking agent with free isocyanate groups B),
   III) mixing the component AC) and the crosslinking agent component with each other shortly before application of the aqueous coating composition.

But furthermore, it Is also possible to use or to store component C), preferably an aqueous solution of component C) as special additive constituent in a paint mixing system, comprising a number of color imparting and special effect-imparting paint components (tint lines or mixing paints), e.g., in a paint mixing system for pigmented base coats or topcoats.

Since the coating composition of the present invention is a two-component system, generally binder component A) and polyisocyanate component B) and in the preferred embodiment component AC) containing hydroxyl groups and amino groups and polyisocyanate component B) may only be mixed together shortly before application. The term "shortly before application" is well-known to a person skilled in the art. The time period within which the ready-to-use coating composition may be prepared prior to the actual use/application depends, e.g., on the pot life of the coating composition.

In principle, the coatings can still be adjusted to spray viscosity with water and/or organic solvents prior to application. Pigments, fillers and additives generally used for paint may be used in one and/or both components of the two-component system.

As the carboxy- and aminofunctional component C) to be used according to the invention is added to the polyisocyanate component B) just before use or application of the entire coating composition, the polyisocyanates are hydrophilized in situ just before use of the coating composition. It is thus possible, as already described hereinbefore, simultaneously to mix components A), B) and C) or to mix a premixed component AC) with the polyisocyanate component B), particularly when using hydroxyfunctional components A). As the reaction of the isocyanate groups with the amino groups of component C) is kinetically preferred to the hydroxyl/isocyanate reaction, the former takes place directly after mixing of components B) and C) and thus allows introduction of carboxyl groups into the polyisocyanate before the actual hydroxyl/isocyanate crosslinking reaction begins.

When using aminofunctional binders A), it should be noted that it is definitely preferable to add component C to the polyisocyanate component B) before mixing binder component A) and polyisocyanate component B) owing to the competing reaction between aminofunctional binders and aminofunctional component C) with the polyisocyanate component B). This way can of course also be used in case of hydroxyfunctional binders A).

The carboxy- and aminofunctional component C to be used according to the invention is used in such quantities that, on the one hand, after the reaction with the polyisocyanate component B), the desired number of free isocyanate groups is still available in the polyisocyanate component B) for the crosslinking reaction and, on the other hand, the polyisocyanate component B) is given the desired carboxyl functionality. The equivalent ratio of amino groups in component C) to free isocyanate groups of the polyisocyanate component B) may be selected in a way that 2-25%, preferably 5-20% of the isocyanate groups of component B) are reacted with the amino groups of component C) (calculated on a molar base).

If partially masked polyisocyanates are used, it is ensured either that free isocyanate groups are available for crosslinking in addition to the masked isocyanate groups after reaction of the polyisocyanates B) with component C), or that all free isocyanate groups have been reacted for hydrophilization purposes, depending on the degree of masking. In the latter case, the process according to the invention may ultimately also provide completely masked polyisocyanate crosslinking agents that have been rendered hydrophilic in situ just before application.

Particularly good dipersibility of the polyisocyanate component B) in the aqueous phase is achieved if the carboxyl groups of component C) are partially or completely neutralized. Component C) may be presented in already neutralized form or is neutralized after addition to the polyisocyanate or to the aqueous system. The neutralization degree may be between 0% and 200%, preferably between .60% and 120%. Suitable neutralizing agents include basic compounds such as tertiary amines, for example, triethylamine, dimethylethanolamine and diethylethanolamine.

Preferably component C) can be used as aqueous solution, e.g., as 3-30% aqueous solution. Especially preferred component C) is provided in an aqueous neutralized form.

The coating compositions, according to the invention, can be applied using known methods, in particular, by spray application. The coating compositions obtained can be cured at room temperature or forced at higher temperatures, for example, up to 80°C. They can, however, even be cured at higher temperatures of, for example, 80 to 160°C.

The coating compositions, according to the invention, are suitable for automotive and industrial coatings. In the automotive coatings sector, the coatings can be used for both vehicle production line painting and vehicle and vehicle part refinishing. For vehicle production line painting stoving (baking) temperatures of 80 to 160°C, for example, are used, preferably 110 to 140°C. For refinishing curing temperatures of, for example, 20°C to 80°C, in particular, 40 to 60°C are used. The coating compositions can also be used for coating large vehicles and transportation vehicles, such as, trucks, busses and railroad cars, where typically curing temperatures of up to 80°C are used.

Either transparent or pigmented coating compositions can be produced. Therefore, the coating compositions according to the invention are suited for use as clear coats but can be pigmented with conventional pigments and used as solid-color topcoats, basecoats or undercoats such as sealer, primer or primer surfacer. They can be used to coat a substrate with a single coat or within a multilayer coating of substrates.

The present invention thus also concems the use of the coating compositions, according to the invention, as topcoat and clear coat compositions as well as a method for producing multilayer coatings in automotive and industrial coatings, the solid color topcoat and transparent clear coat layers of the multilayer coating, in particular being manufactured from the coating compositions according to the invention.

The coating compositions in the form of a solid-color topcoat can be applied, for example, to normal one-component or two-component filler layers. However, the coatings according to the invention can also be applied and cured as a filler layer, for example, on normal primers, for example, two-component epoxide primers or on electrodeposition primers.

The coating compositions in the form of transparent clear coats can be applied, for example, using the wet-in-wet process on solvent-based or aqueous color and/or effect-giving basecoat layers. In this case, the color and/or effect-giving basecoat layer is applied to a substrate, precoated if necessary, in particular, to precoated vehicle bodies or parts thereof, prior to the application of the clear coat layer from the clear coat according to the invention. Following a drying period, if allowed for, both layers are cured together. Thus, for vehicle production line painting, drying can take place, for example, at 20 to 80°C and for refinishing for 15 to 45 minutes at room temperature, depending on relative air humidity.

The present invention can particularly be used to advantage with the usual hydrophobically, i.e., not especially hydrophilically modified polyisocyanate cross-linking agents. The polyisocyanates modified according to the invention with carboxylic groups shortly before application (in-situ) are highly compatible with water-reducible binders and can be mixed simply with these. This is particularly important for such applications of two-component coating compositions, e.g., in vehicle refinishing, where it should be ensured that components can be mixed simply by hand. On the other hand good compatibility and miscibility of binder component and polyisocyanate crosslinking agent lead to coatings with satisfactory appearance, such as, gloss and flow. Furthermore, the use of the coating compositions according to the invention leads to non-hydrophilic coatings with good hardness and chemical as well as water resistance. Also, using the aqueous coating composition or the process for preparing the aqueous coating composition according to the invention allows the preparation of aqueous coating compositions with reduced amount of organic co-solvents while keeping the advantage of acceptable appearance of the resultant coating.

The invention will be further described by reference to the following Examples. All parts and percentages are on a weight basis unless otherwise indicated. All molecular weights disclosed herein are determined by GPC (gel permeation chromatography) using a polystyrene standard.

### Examples

### Example 1

Different combinations of an amino carboxylic acid (glycine-USP from Hampshire Chemical Cooperation) and a commercially available polyisocyanate were qualitatively evaluated for dispersibility of the isocyanate droplets in the aqueous phase and for phase separation in time.

According to the amounts indicated in Table 1, glycine-USP was dissolved in 50 g of deionized water and where indicated, DMEA (N,N-dimethylethanolamine) was added. To this solution 50 g of a blend of 80 parts by weight of Desmodur® N 3600 (100% solids hexamethylenediisocyanate trimer from Bayer) in 20 parts by weight of butyl glycol acetate were added and mixed-in with a spatula. As comparative example the non-modified polyisocyanate (80 parts by weight of Desmodur® N 3600 in 20 parts by weight of butyl glycol acetate) has been used.

**Table 1: (amounts given in gram)**

| | Water | Glycine-USP | DMEA | Desmodur® N3600 / BGA (80/20) |
|---|---|---|---|---|
| Comparative Example | 50 | - | - | 50 |
| Example 1 | 50 | 0.85 | - | 50 |
| Example 2 | 50 | 0.85 | 1.01 | 50 |
| Example 3 | 50 | 3.20 | - | 50 |
| Example 4 | 50 | 3.20 | 3.80 | 50 |

All modifications (example 1 to 4) show smaller isocyanate droplets and slower phase separation than the comparative example. For examples 3 and 4, a more favourable dispersibility of the activator in the aqueous phase has been observed than for examples 1 and 2, respectively. From comparison of examples 2 and 4 with examples 1 and 3, respectively, addition of a neutralizing agent (DMEA) results in a better dispersibility of the activator in the aqueous phase.

### Paint Examples

### Preparation of Topcoats

The following pigment dispersions were used for preparation of topcoats:

| Code | Composition |
|---|---|
| Dispersion 1 | 20 parts of a blue pigment (Hostaperm® blue BT617D from Ciariatit) 20 parts of a dispersing agent as described in U.S. Patent 5,231,131 0.4 parts of a wetting agent (Surtynol® 104 from Air Products) 2 parts of AMP95 (amino methyl propanol from Dow) 57.9 parts of deionized water |
| Dispersion 2 | 25 parts of a violet pigment (Hostaperm® violet RL from Clariant) 20 parts of a dispersing agent (as described above) 0.3 parts of a wetting agent (Surfynol® 104 from Air Products) 1 part of AMP95 5 parts of Dowanol DPM (dipropylene glycol methyl ether from Dow) 48.7 parts of deionized water |
| Dispersion 3 | 10 parts of a black pigment (Raven® 5000 from Columbian Chemicals) 16 parts of a dispersing agent (as described above) 0.3 parts of a wetting agent (Surfynol® 104 from Air Products) 1.8 parts of AMP95 71.9 parts of deionized water |
| Dispersion 4 | 73 parts of titanium dioxide pigment (TiPure® R706 from DuPont) 8.3 parts of a dispersing agent (as described above) 1.5 parts of a wetting agent (Surfynol® 104 from Air Products) 1.7 parts of AMP95 3 parts of Dowanol DPM 12.5 parts of deionized water |

The following amino acid solutions (AA Solutions) were used for preparation of topcoats:

| Code | Composition |
|---|---|
| AA Solution 1 | 91.6 parts of deionized water |
| | 3.8 parts of Glycine-USP from Hampshire Chemical Corporation |
| | 4.6 parts of DMEA (N,N-dimethylethanolamine) |
| AA Solution 2 | 90.8 parts of deionized water |
| | 4,6 parts of Sarcosine, 98% from Aldrich® |
| | 4.6 parts of DMEA (N,N-dimethylethanolamine) |
| AA Solution 3 | 74.1 parts of deionized water |
| | 11.7 parts of Glycine-USP from Hampshire Chemical Cooperation |
| | 14.2 parts of DMEA (N,N-dimethylethanolamine) |
| AA Solution 4 | 72.2 parts of deionized water |
| | 13.9 parts of Sarcosine, 98% from Aldrich® |
| | 13.9 parts of DMEA (N,N-dimethylethanolamine) |

The following isocyanate compositions were used for preparation of topcoats:

| Code | Composition |
|---|---|
| Activator 1 | 80 parts of Desmodur® N 3600 (100% solids hexamethylenediisocyanate trimer from Bayer) |
| | 20 parts of butyl glycol acetate |
| Activator 2 | 63.3 parts of Desmodur® N 3600 (100% solids hexamethylenediisocyanate trimer from Bayer) |
| | 36.7 parts of butyl glycol acetate |

### Paint Example 1

A blue topcoat formulation was prepared by mixing 67.2 parts of an acrylic copolymer dispersion 1 (see preparation below) with 0.1 parts of a wetting agent (Byk® 380N (Byk Chemie)) and 0.5 parts of a defoaming agent (Byk® 011 (Byk Chemie). To this mixture, 7.8 parts of dispersion 1, 3.6 parts of dispersion 2, 1.5 parts of dispersion 3 and 6.2 parts of dispersion 4 were added and mixed. To this blend 9.5 parts of AA solution 1 and 3.6 parts of deionized water were added and mixed in. 100 parts of the above-mentioned topcoat were mixed with 21.7 parts of activator 1. The topcoat was sprayed in a dry-film thickness of 40-45 µm on an steel panel (precoated with an electrodeposition coating and commercial primer surfacer) and baked for 30 minutes at 80°C.

### Preparation of Acrylic Copolymer Dispersion 1

In a reactor equipped with a propeller type of stirrer, a thermometer, condenser and monomer/initiator feeding system, 200 grams of Cardura® E10 (Glycidylester of C10 versatic acid available from Resolution) (CE10) and 90 grams of ethoxypropanol (EPR) were loaded and heated to about 150°C. A mixture of 52 grams of 2-Hydroxyethyl methacrylate (HEMA), 160 grams of Styrene, 68 grams of acrylic acid, 10 grams of Dicumylperoxide (DPC), 40 grams of CE10 and 40 grams of EPR were added over 2 hours 30 minutes to the reactor while keeping the contents at 150°C. After the feed, the reactor contents were held for 30 minutes. After the 30 minutes hold period, 108 grams of HEMA, 30.4 grams of AA, 141.6 grams of Isobutyl Methacrylate, 5 grams of DCP and 45 grams of EPR were added over 2 hours and 30 minutes at about 150°C followed by a rinsing step for the feed system of 5 grams of EPR. After the rinsing step, the contents of the reactor were held for 2 hours at 150°C. The reactor contents were cooled to 100°C and 100 parts of EPR were distilled off. In a next step, 33 grams of dimethylamino ethanol were added for a theoretical acid value of 20.5, the amount corrected for the measured acid value.

The polymer was diluted with B65 grams of water preheated at about 70°C. The copolymer dispersion had a solids content of 45.1 % and a viscosity of 3500 cps. The copolymer had an acid value of 33.6 mg KOH/g (determined on solids) and a number average molecular weight (Mn) of 4500 g/mole.

### Paint Example 2

A blue topcoat formulation was prepared by mixing 67.1 parts of acrylic copolymer dispersion 1 with 0.1 parts of a wetting agent (Byk® 380N (Byk Chemie)) and 0.5 parts of a defoaming agent (Byk® 011 (Byk Chemie). To this mixture, 7.8 parts of dispersion 1, 3.6 parts of dispersion 2, 1.5 parts of dispersion 3 and 6.2 parts of dispersion 4 were added and mixed. To this blend 9.6 parts of AA solution 2 and 3.6 parts of water we added and mixed in.

100 parts of the above-mentioned topcoat were mixed with 21.7 parts of activator 1. The topcoat was sprayed in a dry-film thickness of 40-45 µm on a steel panel (precoated with an electrodeposition coating and commercial primer surfacer) and baked for 30 minutes at 80°C.

### Paint Example 3

A blue topcoat formulation was prepared by mixing 63.9 parts of acrylic copolymer dispersion 1 with 0.09 parts of a wetting agent (Byk® 380N (Byk Chemie)) and 0.45 parts of a defoaming agent (Byk® 011 (Byk Chemie). To this mixture, 7.4 parts of dispersion 1, 3.4 parts of dispersion 2, 1.5 parts of dispersion 3 and 5.9 parts of dispersion 4 were added and mixed. To this blend 11.2 parts of AA solution 3 and 6.2 parts of water were added and mixed in.

100 parts of the above-mentioned topcoat were mixed with 20.7 parts of activator 1. The topcoat was sprayed in a dry-film thickness of 40-45 µm on a steel panel (precoated with an electrodeposition coating and commercial primer surfacer) and baked for 30 minutes at 80°C.

### Paint Example 4

A blue topcoat formulation was prepared by mixing 63.7 parts of acrylic copolymer dispersion 1 with 0.09 parts of a wetting agent (Byk® 380N (Byk Chemie)) and 0.45 parts of a defoaming agent (Byk® 011 (Byk Chemie). To this mixture, 7.4 parts of dispersion 1, 3.4 parts of dispersion 2,1.5 parts of dispersion 3 and 5.9 parts of dispersion 4 were added and mixed. To this blend 11.4 parts of AA solution 4 and 6.2 parts of water were added and mixed in.

100 parts of the above-mentioned topcoat were mixed with 20.6 parts of activator 1. The topcoat was sprayed in a dry-film thickness of 40-45 µm on a steel panel (precoated with an electrodeposition coating and commercial primer surfacer) and baked for 30 minutes at 80°C.

### Comparative Example 1

A blue topcoat formulation was prepared by mixing 68 parts of acrylic copolymer dispersion 1 with 0.1 parts of a wetting agent (Byk® 380N (Byk Chemie)) and 0.5 parts of a defoaming agent (Byk® 011 (Byk Chemie). To this mixture, 7.9 parts of dispersion 1, 3.6 parts of dispersion 2, 1.6 parts of dispersion 3 and 6,2 parts of dispersion 4 were added and mixed. To this blend 12.1 parts of water were added and mixed in.

100 parts of the above-mentioned topcoat were mixed with 22 parts of activator 1. The topcoat was sprayed in a dry-film thickness of 40-45 µm on a steel panel (precoated with an electrodeposition coating and commercial primer surfacer and baked for 30 minutes at 80°C.

The appearance results of paint examples 1 to 4 and comparative example are shown in Table 2.

**Table 2**

| | Comparative example | Paint example 1 | Paint example 2 | Paint example 3 | Paint example 4 |
|---|---|---|---|---|---|
| Gloss 20° | 35 | 52 | 56 | 68 | 75 |
| DOl | 64.0 | 66.2 | 66.1 | 75.6 | 79.1 |
| Dullness | 58.8 | 51.4 | 50.9 | 33.9 | 19.6 |
| Tension | 17.0 | 15.2 | 14.7 | 19.5 | 17.0 |
| Long wave | 9.4 | 14.0 | 15.7 | 5.1 | 9.3 |
| Short | | | | | |
| | 16,9 | 36,4 | 39.8 | 34.4 | 46.0 |
| wave | | | | | |
| Sharpness | 25.0 | 25.0 | 25.0 | 42.0 | 54.7 |

The results in Table 2 show an improved appearance and improved gloss of the pigmented coating compositions according to the invention compared with a coating composition not containing component C).

### Paint Example 5

A blue topcoat formulation was prepared by mixing 67.3 parts of acrylic copolymer dispersion 1 with 0.1 parts of a wetting agent (Byk® 38ON (Byk Chemie)) and 0.5 parts of a defoaming agent (Byk® 011 (Byk Chemie). To this mixture, 7.8 parts of dispersion 1, 3.6 parts of dispersion 2, 1.5 parts of dispersion 3 and 6.2 parts of dispersion 4 were added and mixed. To this blend 9.5 parts of AA solution 1 and 3.5 parts of water were added and mixed in.

100 parts of the above-mentioned topcoat were mixed with 25.9 parts of activator 2. The topcoat (40-45µ) was sprayed on an electro coated steel panel with commercial primer surfacer and baked for 30 minutes at 80°C.

### Comparative Example 2

A blue topcoat formulation was prepared by mixing 68.2 parts of acrylic copolymer dispersion 1 with 0.1 parts of a wetting agent (Byk® 380N (Byk Chemie)) and 0.5 parts of a defoaming agent (Byk® 011 (Byk Chemie). To this mixture, 7.9 parts of dispersion 1, 3.6 parts of dispersion 2, 1.6 parts of dispersion 3 and 6.2 parts of dispersion 4 were added and mixed. To this blend 11.9 parts of water were added and mixed in.

100 parts of the above-mentioned topcoat were mixed with 25.9 parts of activator 2. The topcoat (40-45µ) was sprayed on an electro coated steel panel with commercial primer surfacer and baked for 30 minutes at 80°C.

In Table 3 the appearance results of above mentioned paint examples are shown.

Even when using a higher amount of organic solvents in the coating composition (activator 2) the pigmented coating compositions according to the invention show still a slightly increased gloss and better appearance results, most reflected in the DOI and dullness values.

**Table 3**

| | Comparative example 2 | Paint example 5 |
|---|---|---|
| Gloss 20° | 81 | 83 |
| DOI | 88.9 | 94.2 |
| Dullness | 15.3 | 5.2 |
| Tension | 23.2 | 24.0 |
| Long wave | 2.0 | 1.4 |
| Short wave | 13.9 | 7.3 |

### Paint Example 6

A blue topcoat formulation was prepared by mixing 67.3 parts of acrylic copolymer dispersion 1 with 0.1 parts of a wetting agent (Byk® 380N (Byk Chemie)) and 0.5 parts of a defoaming agent (Byk® 011 (Byk Chemie). To this mixture, 7.8 parts of dispersion 1, 3.6 parts of dispersion 2, 1.5 parts of dispersion 3 and 6,2 parts of dispersion 4 were added and mixed. To this blend 9.5 parts of AA solution 1 and 3.5 parts of water were added and mixed in.

100 parts of the above-mentioned topcoat were mixed with 25.9 parts of activator 2. The topcoat (40-45µ) was sprayed 45 minutes after addition of the activator on an electro coated steel panel with commercial primer surfacer and baked for 30 minutes at 80°C.

### Paint Example 7

A blue topcoat formulation was prepared by mixing 67.2 parts of acrylic copolymer dispersion 1 with 0.1 parts of a wetting agent (Byk® 380N (Byk Chemie)) and 0.5 parts of a defoaming agent (Byk® 011 (Byk Chemie). To this mixture, 7.8 parts of dispersion 1, 3.6 parts of dispersion 2, 1.5 parts of dispersion 3 and 6.2 parts of dispersion 4 were added and mixed. To this blend 9.6 parts of AA solution 2 and 3.5 parts of water were added and mixed in.

100 parts of the above-mentioned topcoat were mixed with 25.9 parts of activator 2. The topcoat (40-45µ) was sprayed 45 minutes after addition of the activator on an electro coated steel panel with commercial primer surfacer and baked for 30 minutes at 80°C.

### Comparative Example 3

A blue topcoat formulation was prepared by mixing 68.2 parts of acrylic copolymer dispersion 1 with 0.1 parts of a wetting agent (Byk® 380N (Byk Chemie)) and 0.5 parts of a defoaming agent (Byk® 011 (Byk Chemie). To this mixture, 7.9 parts of dispersion 1, 3.6 parts of dispersion 2, 1.6 parts of dispersion 3 and 6.2 parts of dispersion 4 were added and mixed. To this blend 11.9 parts of water were added and mixed in.

100 parts of the above-mentioned topcoat were mixed with 25.9 parts of activator 2. The topcoat (40-45µ) was sprayed 45 minutes after addition of the activator on an electro coated steel panel with commercial primer surfacer and baked for 30 minutes at 80°C.

Table 4 the appearance results of above mentioned paint examples are shown.

Even when using a higher amount of organic solvents in the coating composition (activator 2) the pigmented coating compositions according to the invention show still an increased gloss and better appearance results, most reflected in the DOl and dullness values.

**Table 4**

| | Comparative example 3 | Paint example 6 | Paint example 7 |
|---|---|---|---|
| Gloss 20° | 74.1 | 81.1 | 81.1 |
| DOI | 79.2 | 90.5 | 91.0 |
| Dullness | 32.3 | 11.7 | 11.4 |
| Tension | 20.0 | 19.2 | 18.1 |
| Long wave | 4.5 | 5.9 | 7.2 |
| Short wave | 16.1 | 15.0 | 13.6 |

### Preparation of Clear Coats

The following amino acid (AA) solutions were used for the preparation of clear coats:

| Code | Composition |
|---|---|
| AA Solution 1 | 91.6 parts of deionized water |
| | 3.8 parts of Glycine-USP from Hampshire Chemical Cooperation |
| | 4.6 parts of DMEA (N,N-dimethylethanolamine) |
| AA Solution 2 | 90.9 parts of deionized water |
| | 4.55 parts of Sarcosine 98% from Aldrich® |
| | 4.55 parts of DMEA (N,N-dimethylethanolamine) |
| AA Solution 3 | 78.4 parts of deionized water |
| | 9.8 parts of Glycine-USP from Hampshire Chemical Cooperation |
| | 11.8 parts of DMEA (N,N-dimethylethanolamine) |
| AA Solution 4 | 76.9 parts of deionized water |
| | 11.55 parts of Sarcosine 98% from Aldrich® |
| | 11.55 parts of DMEA (N,N-dimethylethanolamine) |

An activator solution was prepared by blending 80 parts Desmodur XP241 0 (100% solids asymmetric hexamethylenediisocyanate trimer from Bayer) with 20 parts of butyl glycol acetate.

### Paint Example 8

A clear coat formulation was prepared by mixing 90.5 parts of acrylic copolymer dispersion 1 with 9.5 parts of butoxy propanol. To this blend 12.6 parts of AA solution 1 were added and mixed. This mixture was stored overnight. 112.6 parts of the above-mentioned clear coat was mixed with 28 parts of activator. The viscosity of the clear coats was in a second step adjusted by addition of 22.7 parts water to a spray viscosity of 19-21 sec (measured according to DIN EN ISO 2431, 4mm cup).

The clear coat was sprayed over a commercial black waterborne basecoat and baked for 30 minutes at 60°C.

### Paint Example 9

A clear coat formulation was prepared by mixing 90.5 parts of an acrylic copolymer dispersion 1 with 9.5 parts of butoxy propanol. To this blend 12.6 parts of AA solution 2 were added and mixed. This mixture was stored overnight.

112.6 parts of the above-mentioned clear coat was mixed with 28 parts of activator. The viscosity of the clear coats was in a second step adjusted by addition of 22.7 parts water to a spray viscosity of 19-21 sec (measured according to DIN EN ISO 2431, 4mm cup). The clear coat was sprayed over a commercial black waterborne basecoat and baked for 30 minutes at 60°C.

### Paint Example 10

A clear coat formulation was prepared by mixing 90.5 parts of acrylic copolymer dispersion 1 with 9.5 parts of butoxy propanol. To this blend 14.7 parts of AA solution 3 were added and mixed. This mixture was stored overnight. 114.7 parts of the above-mentioned clear coat was mixed with 28 parts of activator. The viscosity of the clear coats was in a second step adjusted by addition of 26.8 parts water to a spray viscosity of 19-21 sec (measured according to DIN EN ISO 2431, 4mm cup).

The clear coat was sprayed over a commercial black waterborne basecoat and baked for 30 minutes at 60°C.

### Paint Example 11

A clear coat formulation was prepared by mixing 90.5 parts of acrylic copolymer dispersion 1 with 9.5 parts of butoxy propanol. To this blend 14.7 parts of AA solution 4 were added and mixed. This mixture was stored overnight. 114.7 parts of the above-mentioned clear coat was mixed with 28 parts of activator. The viscosity of the clear coats was in a second step adjusted by addition of 26.8 parts water to a spray viscosity of 19-21 sec (measured according to DIN EN ISO 2431, 4mm cup). The clear coat was sprayed over a commercial black waterborne basecoat and baked for 30 minutes at 60°C.

### Comparative Paint Example 4

A clear coat formulation was prepared by mixing 90.5 parts of acrylic copolymer dispersion 1 with 9.5 parts of butoxy propanol. This mixture was stored overnight.

100 parts of the above-mentioned clear coat was mixed with 28 parts of activator. The viscosity of the clear coats was in a second step adjusted by addition of 30.4 parts water to a spray viscosity of 19-21 sec (measured according to DIN EN ISO 2431, 4mm cup).

The clear coat was sprayed over a commercial black waterborne basecoat and baked for 30 minutes at 60°C.

Table 5 shows the appearance results of the above mentioned clear coat examples.

**Table 5**

| | Comparative example 4 | Paint example 8 | Paint example 9 | Paint example 10 | Paint example 11 |
|---|---|---|---|---|---|
| Gloss 20° | 83.2 | 85.0 | 80.8 | 86.1 | 86.5 |
| DOl | 86.1 | 89.2 | 90.7 | 94.2 | 94.9 |
| Dullness | 19.3 | 13.2 | 10.9 | 4.2 | 3.6 |
| Tension | 21.1 | 18.0 | 21.5 | 21.2 | 21.9 |
| Long wave | 3.5 | 8.4 | 3.1 | 3.4 | 2.8 |
| Short wave | 14,5 | 15.2 | 11.9 | 9.3 | 6.2 |
| Sharpness | 61.0 | 60.7 | 69.4 | 75.0 | 75.4 |

It can be seen, that the coating examples 8-11 according to the invention show an improved appearance compared with the comparative example 4 (containing no component C). This improvement is most reflected in the DOI and dullness values.

### Testing methods:

Gloss 20°: Gloss values are measured with a Dr Lange - Type REFO 3 apparatus at an angle of 20°
Distinction of Image (DOl), dullness, tension and sharpness:

The DOI, dullness, tension and sharpness values of the films have been determined using a Wave-Scan DOl device from Byk Gardner (D-4816 apparatus).

## Claims

1. Aqueous coating composition, comprising
A) at least one water-dilutable anionically and/or non-ionically modified binder with functional groups containing active hydrogen,
B) at least one polyisocyanate cross-linking agent with free isocyanate groups,
C) at least one amino functional and acid functional compound having at least one carboxyl group and at least one group selected from a group consisting of primary amino group, secondary amino group and mixtures thereof,
D) water and optionally,
E) coating additives, pigments and organic solvents.

2. Aqueous coating composition of claim 1, comprising 10-90% by weight solids of component A), 5-70% by weight solids of component B) and 0.05-15% by weight solids of component C), wherein the % by weight of components A), B) and C) add up to 100% by weight.

3. Aqueous coating composition of claim 2, comprising 0.1-10% by weight solids of component C).

4. Aqueous coating composition of claim 1, wherein component A) comprises
at least one hydroxy-functional water-dilutable anionically and/or non-ionically modified binder.

5. Aqueous coating composition of claim 1, wherein component A) comprises at least one hydroxy-functional water-dilutable anionically and/or non-ionically modified binder selected from the group consisting of (meth)acrylic copolymers, polyurethanes, polyesters and mixtures thereof.

6. Aqueous coating composition of claim 1, wherein component B) comprises at least one polyisocyanate cross-linking agent with free isocyanate groups and with blocked isocyanate groups.

7. Aqueous coating composition of claim 1, wherein component C) comprises at least one amino mono- or dicarboxylic acid with at least one primary and/or secondary amino group.

8. Aqueous coating composition of claim 1, wherein component A) comprises at least one hydroxy-functional water-dilutable anionically and/or non-ionically modified binder selected from the group consisting of (meth)acrylic copolymers, polyurethanes, polyesters and mixtures thereof and component C) comprises at least one amino mono- or dicarboxylic acid with at least one primary and/or secondary amino group.

9. Aqueous coating composition of claim 1, wherein component C) comprises at least one amino functional and acid functional compound having a molecular weight of 75 to 1000 g/mol.

10. Aqueous coating composition of claim 1, wherein component A) comprises at least one hydroxy-functional water-dilutable anionically and/or non-ionically modified binder selected from the group consisting of (meth)acrylic copolymers, polyurethanes, polyesters and mixtures thereof and component C) comprises at least one amino functional and acid functional compound having a molecular weight of 75 to 1000 g/mol.

11. Aqueous coating composition of claim 1, wherein component C) comprises reaction products of ammonium and amine compounds having at least one primary amine group or at least two secondary amine groups with olefinally unsaturated di- or monocarboxylic acids.

12. Aqueous coating composition of claim 1, wherein the carboxyl groups of component C) are at least partially neutralized with a neutralizing agent.

13. Aqueous coating composition of claim 1, comprising
Component AC), comprising a mixture of at least one water-dilutable anionically and/or non-ionically modified hydroxy-functional binder A) and at least one amino functional and acid functional compound C) having at least one carboxyl group and at least one group selected from a group consisting of primary amino group, secondary amino group and mixtures thereof,
Component B), comprising at least one polyisocyanate cross-linking agent with free isocyanate groups,
D) water and optionally,
E) coating additives, pigments and organic solvents.

14. Process for preparing the aqueous coating compositions of claim 1, comprising the steps:
I) providing a binder component comprising at least one water-dilutable anionically and/or non-ionically modified binder with functional groups containing active hydrogen A),
II) providing a cross-linking agent component, comprising at least one polyisocyanate cross-linking agent with free isocyanate groups B),
III) mixing the binder component A) and the crosslinking agent component B) with each other and
IV) adding at least one amino functional and acid functional compound C) having at least one carboxyl group and at least one group selected from a group consisting of primary amino group, secondary amino group and mixtures thereof to the polyisocyanate cross-linking agent B),
wherein the amino functional and acid functional compound C) is added to the polyisocyanate cross-linking agent B) shortly before application of the aqueous coating composition.

15. Process for preparing the aqueous coating composition of claim 1, comprising the steps
I) providing a component AC) comprising at least one water-dilutable anionically and/or non-ionically modified binder with functional groups containing active hydrogen A) and at least one amino functional and acid functional compound C) having at least one carboxyl group and at least one group selected from a group consisting of primary amino group, secondary amino group and mixtures thereof
II) providing a cross-linking agent component, comprising at least one polyisocyanate cross-linking agent with free isocyanate groups B),
III) mixing component AC) and the crosslinking agent component B) with each other shortly before application of the aqueous coating composition.

16. A multi-layer coating on a substrate comprising at least one coat of the coating composition of claim 1.

17. A multi-layer coating on a substrate comprising a clear coat layer of the coating composition of claim 1.

18. A multi-layer coating on a substrate comprising a pigmented top coat layer of the coating composition of claim 1.

## Patentansprüche

1. Wässrige Beschichtungszusammensetzung, umfassend
A) mindestens ein wasserverdünnbares anionisch und/oder nichtionisch modifiziertes Bindemittel mit aktiven Wasserstoff enthaltenden funktionellen Gruppen ,
B) mindestens ein Polyisocyanatvernetzungsmittel mit freien Isocyanatgruppen,
C) mindestens eine aminofunktionelle und säurefunktionelle Verbindung mit mindestens einer Carboxylgruppe und mindestens einer Gruppe, ausgewählt aus einer Gruppe, bestehend aus primärer Aminogruppe, sekundärer Aminogruppe und Gemischen davon,
D) Wasser und gegebenenfalls
E) Beschichtungszusatzstoffe, Pigmente und organische Lösungsmittel.

2. Wässrige Beschichtungszusammensetzung nach Anspruch 1, umfassend 10-90 Gew.-% Feststoffe von Komponente A), 5-70 Gew.-% Feststoffe von Komponente B) und 0,05-15 Gew.-% Feststoffe von Komponente C), wobei die Gew.-% der Komponenten A), B) und C) sich zu 100 Gew.-% summieren.

3. Wässrige Beschichtungszusammensetzung nach Anspruch 2, umfassend 0,1-10 Gew.-% Feststoffe von Komponente C).

4. Wässrige Beschichtungszusammensetzung nach Anspruch 1, wobei Komponente A) mindestens ein hydroxyfunktionelles wasserverdünnbares anionisch und/oder nichtionisch modifiziertes Bindemittel umfaßt.

5. Wässrige Beschichtungszusammensetzung nach Anspruch 1, wobei Komponente A) mindestens ein hydroxyfunktionelles wasserverdünnbares anionisch und/oder nichtionisch modifiziertes Bindemittel, ausgewählt aus der Gruppe, bestehend aus (Meth)acrylcopolymeren, Polyurethanen, Polyestern und Gemischen davon, umfaßt.

6. Wässrige Beschichtungszusammensetzung nach Anspruch 1, wobei Komponente B) mindestens ein Polyisocyanatvernetzungsmittel mit freien Isocyanatgruppen und mit blockierten Isocyanatgruppen umfaßt.

7. Wässrige Beschichtungszusammensetzung nach Anspruch 1, wobei Komponente C) mindestens eine Aminomono- oder -dicarbonsäure mit mindestens einer primären und/oder sekundären Aminogruppe umfaßt.

8. Wässrige Beschichtungszusammensetzung nach Anspruch 1, wobei Komponente A) mindestens ein hydroxyfunktionelles wasserverdünnbares anionisch und/oder nichtionisch modifiziertes Bindemittel, ausgewählt aus der Gruppe, bestehend aus (Meth)acrylcopolymeren, Polyurethanen, Polyestern und Gemischen davon, umfaßt und Komponente C) mindestens eine Aminomono- oder -dicarbonsäure mit mindestens einer primären und/oder sekundären Aminogruppe umfaßt.

9. Wässrige Beschichtungszusammensetzung nach Anspruch 1, wobei Komponente C) mindestens eine aminofunktionelle und säurefunktionelle Verbindung mit einem Molekulargewicht von 75 bis 1000 g/mol umfaßt.

10. Wässrige Beschichtungszusammensetzung nach Anspruch 1, wobei Komponente A) mindestens ein hydroxyfunktionelles wasserverdünnbares anionisch und/oder nichtionisch modifiziertes Bindemittel, ausgewählt aus der Gruppe, bestehend aus (Meth)acrylcopolymeren, Polyurethanen, Polyestern und Gemischen davon, umfaßt und Komponente C) mindestens eine aminofunktionelle und säurefunktionelle Verbindung mit einem Molekulargewicht von 75 bis 1000 g/mol umfaßt.

11. Wässrige Beschichtungszusammensetzung nach Anspruch 1, wobei Komponente C) Reaktionsprodukte von Ammonium- und Aminverbindungen mit mindestens einer primären Amingruppe oder mindestens zwei sekundären Amingruppen mit olefinisch ungesättigten Di- oder Monocarbonsäuren umfaßt.

12. Wässrige Beschichtungszusammensetzung nach Anspruch 1, wobei die Carboxylgruppen von Komponente C) zumindest teilweise mit einem Neutralisierungsmittel neutralisiert sind.

13. Wässrige Beschichtungszusammensetzung nach Anspruch 1, umfassend
Komponente AC), umfassend ein Gemisch von mindestens einem wasserverdünnbaren anionisch und/oder nichtionisch modifizierten hydroxyfunktionellen Bindemittel A) und mindestens einer aminofunktionellen und säurefunktionellen Verbindung C) mit mindestens einer Carboxylgruppe und mindestens einer Gruppe, ausgewählt aus einer Gruppe, bestehend aus primärer Aminogruppe, sekundärer Aminogruppe und Gemischen davon,
Komponente B), umfassend mindestens ein Polyisocyanatvernetzungsmittel mit freien Isocyanatgruppen,
D) Wasser und gegebenenfalls
E) Beschichtungszusatzstoffe, Pigmente und organische Lösungsmittel.

14. Verfahren zum Herstellen der wässrigen Beschichtungszusammensetzungen nach Anspruch 1, umfassend die Schritte:
I) Bereitstellen einer Bindemittelkomponente, umfassend mindestens ein wasserverdünnbares anionisch und/oder nichtionisch modifiziertes Bindemittel mit aktiven Wasserstoff enthaltenden funktionellen Gruppen A),
II) Bereitstellen einer Vernetzungsmittelkomponente, umfassend mindestens ein Polyisocyanatvernetzungsmittel mit freien Isocyanatgruppen B),
III) Mischen der Bindemittelkomponente A) und der Vernetzungsmittelkomponente B) miteinander und
IV) Hinzufügen von mindestens einer aminofunktionellen und säurefunktionellen Verbindung C) mit mindestens einer Carboxylgruppe und mindestens einer Gruppe, ausgewählt aus einer Gruppe, bestehend aus primärer Aminogruppe, sekundärer Aminogruppe und Gemischen davon, zu dem Polyisocyanatvernetzungsmittel B),
wobei die aminofunktionelle und säurefunktionelle Verbindung C) zu dem Polyisocyanatvernetzungsmittel B) kurz vor Aufbringung der wässrigen Beschichtungszusammensetzung hinzugefügt wird.

15. Verfahren zum Herstellen der wässrigen Beschichtungszusammensetzung nach Anspruch 1, umfassend die Schritte
I) Bereitstellen einer Komponente AC), umfassend mindestens ein wasserverdünnbares anionisch und/oder nichtionisch modifiziertes Bindemittel mit aktiven Wasserstoff enthaltenden funktionellen Gruppen A) und mindestens eine aminofunktionelle und säurefunktionelle Verbindung C) mit mindestens einer Carboxylgruppe und mindestens einer Gruppe, ausgewählt aus einer Gruppe, bestehend aus primärer Aminogruppe, sekundärer Aminogruppe und Gemischen davon,
II) Bereitstellen einer Vernetzungsmittelkomponente, umfassend mindestens ein Polyisocyanatvernetzungsmittel mit freien Isocyanatgruppen B),
III) Mischen der Komponente AC) und der Vernetzungsmittelkomponente B) miteinander kurz vor Aufbringung der wässrigen Beschichtungszusammensetzung.

16. Mehrschichtbeschichtung auf einem Substrat, umfassend mindestens eine Schicht der Beschichtungszusammensetzung nach Anspruch 1.

17. Mehrschichtbeschichtung auf einem Substrat, umfassend eine Klarlackschicht der Beschichtungszusammensetzung nach Anspruch 1.

18. Mehrschichtbeschichtung auf einem Substrat, umfassend eine pigmentierte Decklackschicht der Beschichtungszusammensetzung nach Anspruch 1.

## Revendications

1. Composition aqueuse de revêtement, comprenant
A) au moins un liant anioniquement et/ou non ioniquement modifié, pouvant être dilué dans l'eau, avec des groupes fonctionnels contenant de l'hydrogène actif,
B) au moins un agent de liaison de type polyisocyanate avec des groupes isocyanates libres,
C) au moins un composé à fonctionnalité amino et fonctionnalité acide ayant au moins un groupe carboxyle et au moins un groupe choisi parmi un groupe constitué d'un groupe amino primaire, d'un groupe amino secondaire et de mélanges de ceux-ci,
D) de l'eau et facultativement,
E) des additifs de revêtement, des pigments et des solvants organiques.

2. Composition aqueuse de revêtement selon la revendication 1, comprenant 10 à 90 % en poids de solides de composant A), 5 à 70 % en poids de solides de composant B) et 0,05 à 15 % en poids de solides de composant C), dans laquelle le pourcentage en poids de solides de composant A), B), et C) s'additionnent jusqu'à 100 % en poids.

3. Composition aqueuse de revêtement selon la revendication 2, comprenant 0,1 à 10 % en poids de solides de composant C).

4. Composition aqueuse de revêtement selon la revendication 1, dans laquelle le composant A) comprend au moins un liant anioniquement et/ou non ioniquement modifié pouvant être dilué dans l'eau, à fonctionnalité hydroxyle.

5. Composition aqueuse de revêtement selon la revendication 1, dans laquelle le composant A) comprend au moins un liant anioniquement et/ou non ioniquement modifié, pouvant être dilué dans l'eau, à fonctionnalité hydroxyle choisi parmi le groupe constitué des copolymères (méth)acryliques, des polyuréthanes, des polyesters et de mélanges de ceux-ci.

6. Composition aqueuse de revêtement selon la revendication 1, dans laquelle le composant B) comprend au moins un agent de réticulation de type polyisocyanate avec des groupes isocyanates libres et avec des groupes isocyanates bloqués.

7. Composition aqueuse de revêtement selon la revendication 1, dans laquelle le composant C) comprend au moins un acide aminé mono- ou dicarboxylique avec au moins un groupe amino primaire et/ou secondaire.

8. Composition aqueuse de revêtement selon la revendication 1, dans laquelle le composant A) comprend au moins un liant anioniquement et/ou non ioniquement modifié, pouvant être dilué dans l'eau, à fonctionnalité hydroxyle choisi parmi le groupe constitué des copolymères (méth)acryliques, des polyuréthanes, des polyesters et de mélanges de ceux-ci et le composant C) comprend au moins un acide aminé mono- ou dicarboxylique avec au moins un groupe amino primaire et/ou secondaire.

9. Composition aqueuse de revêtement selon la revendication 1, dans laquelle le composant C) comprend au moins un composé à fonctionnalité amino et fonctionnalité acide ayant un poids moléculaire de 75 à 1 000 g/mol.

10. Composition aqueuse de revêtement selon la revendication 1, dans laquelle le composant A) comprend au moins un liant anioniquement et/ou non ioniquement modifié, pouvant être dilué dans l'eau, à fonctionnalité hydroxyle choisi parmi le groupe constitué des copolymères (méth)acryliques, des polyuréthanes, des polyesters et de mélanges de ceux-ci et le composant C) comprend au moins un composé à fonctionnalité amino et fonctionnalité acide ayant un poids moléculaire de 75 à 1 000 g/mol.

11. Composition aqueuse de revêtement selon la revendication 1, dans laquelle le composant C) comprend des produits réactionnels d'ammonium et de composés de type amine ayant au moins un groupe amine primaire ou au moins deux groupes amines secondaires avec des acides di- ou monocarboxyliques oléfiniquement insaturés.

12. Composition aqueuse de revêtement selon la revendication 1, dans laquelle les groupes carboxyles du composant C) sont au moins partiellement neutralisés avec un agent de neutralisation.

13. Composition aqueuse de revêtement selon la revendication 1, comprenant
le composant AC), comprenant un mélange d'au moins un liant anioniquement et/ou non ioniquement modifié, pouvant être dilué dans l'eau, à fonctionnalité hydroxyle A) et au moins un composé à fonctionnalité amino et fonctionnalité acide C) ayant au moins un groupe carboxyle et au moins un groupe choisi parmi un groupe constitué d'un groupe amino primaire, d'un groupe amino secondaire et de mélanges de ceux-ci,
le composant B), comprenant au moins un agent de réticulation de type polyisocyanate avec des groupes isocyanates libres,
D), de l'eau et facultativement,
E) des additifs de revêtement, des pigments et des solvants organiques.

14. Procédé de préparation des compositions aqueuses de revêtement selon la revendication 1, comprenant les étapes de:
I) fourniture d'un composant de type liant comprenant au moins un liant anioniquement et/ou non ioniquement modifié, pouvant être dilué dans l'eau, avec des groupes fonctionnels contenant de l'hydrogène actif A),
II) fourniture d'un composant de type agent de réticulation, comprenant au moins un agent de réticulation de type polyisocyanate avec des groupes isocyanates libres B),
III) mélange du composant de type liant A) et du composant de type agent de réticulation B) l'un avec l'autre et
IV) addition d'au moins un composé à fonctionnalité amino et fonctionnalité acide C) ayant au moins un groupe carboxyle et au moins un groupe choisi parmi un groupe constitué d'un groupe amino primaire, d'un groupe amino secondaire et de mélanges de ceux-ci à l'agent de réticulation de type polyisocyanate B),
dans lequel le composé à fonctionnalité amino et fonctionnalité acide C) est ajouté à l'agent de réticulation de type polyisocyanate B) peu de temps avant l'application de la composition aqueuse de revêtement.

15. Procédé de préparation de la composition aqueuse de revêtement selon la revendication 1, comprenant les étapes:
I) fourniture d'un composant AC) comprenant au moins un liant anioniquement et/ou non ioniquement modifié pouvant être dilué dans l'eau, avec des groupes fonctionnels contenant de l'hydrogène actif A) et au moins un composé à fonctionnalité amino et fonctionnalité acide C) ayant au moins un groupe carboxyle et au moins un groupe choisi parmi un groupe constitué d'un groupe amino primaire, d'un groupe amino secondaire et de mélanges de ceux-ci
II) fourniture d'un composant de type agent de réticulation, comprenant au moins un agent de réticulation de type polyisocyanate avec des groupes isocyanates libres B),
III) mélange du composant AC) et du composant de type agent de réticulation B) l'un avec l'autre peu de temps avant l'application de la composition aqueuse de revêtement.

16. Revêtement multicouche sur un substrat comprenant au moins un revêtement de la composition de revêtement selon la revendication 1.

17. Revêtement multicouche sur un substrat comprenant une couche de revêtement claire de la composition de revêtement selon la revendication 1.

18. Revêtement multicouche sur un substrat comprenant une couche de revêtement de finition pigmentée de la composition de revêtement selon la revendication 1.
